# EUROPEAN PATENT APPLICATION

(11) **EP 4 498 517 A1**
(43) Date of publication of application: **29.01.2025**
(21) Application number: 24187799.2
(22) Date of filing: 10.07.2024
(51) Int. Cl.: H01Q 1/28, H01Q 1/02, H01Q 1/42, B64C 1/36, B64C 1/40

(54) **SYSTEM FOR ATTACHING HEAT GENERATING EQUIPMENT TO AN EXTERIOR OF AN AIRCRAFT**

(30) Priority: 25.07.2023 US 202318358776; 25.07.2023 US 202318358826
(71) Applicant: The Boeing Company, Arlington, VA 22202 (US)
(72) Inventor: DIVERDE, Michel B., Arlington, 22202 (US); CAVINESS, Timothy Allen, Arlington, 22202 (US); LUCERO, Jared J., Arlington, 22202 (US); AVILA, Steven J., Arlington, 22202 (US); TORGERSON, Ryan Kevin, Arlington, 22202 (US)
(74) Representative: Plasseraud IP

(57) **Abstract**

A system and method for attaching heat generating equipment to an exterior of an aircraft. The mounting system comprises a heat chamber formed by a number of conductive materials, the heat chamber having a recess open to an environment outside the aircraft, heat generating equipment secured within the recess, and a layer of insulation between the heat chamber and the aircraft, the layer of insulation positioned on an opposite side of the heat chamber than an opening of the recess.

## Description

### 1. Field:

The present disclosure relates generally to aircraft, and more specifically to attaching heat generating equipment to an exterior of an aircraft.

### 2. Background:

Antennas are present on aircraft for at least one of navigation and communication. Aircraft also utilize several types of sensors for detecting temperature, airflow, vibration, position, force, pressure, or any other desirable characteristic. Adding antennas or sensors or utilizing new technologies for antennas and sensors can generate additional heat.

Therefore, it would be desirable to have a method and apparatus that takes into account at least some of the issues discussed above, as well as other possible issues.

### SUMMARY

An embodiment of the present disclosure provides a mounting system for attaching heat generating equipment to an exterior of an aircraft. The mounting system comprises a heat chamber, heat generating equipment, and a layer of insulation. The heat chamber is formed by a number of conductive materials. The heat chamber has a recess open to an environment outside the aircraft. The heat generating equipment is secured within the recess. The layer of insulation is between the heat chamber and the aircraft. The layer of insulation is positioned on an opposite side of the heat chamber than an opening of the recess.

Another embodiment of the present disclosure provides a mounting system for attaching heat generating equipment to an exterior of an aircraft. The mounting system comprises a subplate having a recess surrounded by a flange, heat generating equipment positioned within the recess, and a layer of insulation secured to a backside of the subplate. The subplate is formed of a conductive material.

Another embodiment of the present disclosure provides a method of attaching heat generating equipment to an exterior of an aircraft. A layer of insulation is positioned between the heat generating equipment and a skin of a fuselage of the aircraft. The heat generating equipment is secured in a recess of a heat chamber formed by a number of conductive materials between the layer of insulation and an outside environment.

Yet another embodiment of the present disclosure provides a method of attaching heat generating equipment to an exterior of an aircraft. A layer of insulation is positioned between the heat generating equipment and a skin of a fuselage of the aircraft. A shroud is secured over the layer of insulation to form a heat chamber between the layer of insulation and an outside environment.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft in accordance with an illustrative embodiment;
**Figure 2** is an illustration of a block diagram of an aircraft with a mounting system in accordance with an illustrative embodiment;
**Figure 3** is an illustration of a cross-sectional view of a mounting system for attaching heat generating equipment in accordance with an illustrative embodiment;
**Figure 4** is an illustration of an isometric view of portions of a mounting system for attaching heat generating equipment in accordance with an illustrative embodiment;
**Figure 5** is an illustration of an isometric view of portions of a mounting system for attaching heat generating equipment in accordance with an illustrative embodiment;
**Figure 6** is an illustration of an isometric view of portions of a mounting system for attaching heat generating equipment in accordance with an illustrative embodiment;
**Figure 7** is an illustration of an isometric view of portions of a mounting system for attaching heat generating equipment in accordance with an illustrative embodiment;
**Figure 8** is an illustration of an isometric view of portions of a mounting system for attaching heat generating equipment in accordance with an illustrative embodiment;
**Figure 9** is an illustration of a cross-sectional view of portions of a mounting system for attaching heat generating equipment in accordance with an illustrative embodiment;
**Figure 10** is an illustration of a block diagram of an aircraft with a mounting system in accordance with an illustrative embodiment;
**Figure 11** is an illustration of an isometric view of portions of a mounting system for attaching heat generating equipment in accordance with an illustrative embodiment;
**Figure 12** is an illustration of an isometric view of portions of a mounting system for attaching heat generating equipment in accordance with an illustrative embodiment;
**Figure 13** is an illustration of a cross-sectional view of a mounting system for attaching heat generating equipment in accordance with an illustrative embodiment;
**Figure 14** is an illustration of a cross-sectional view of a mounting system for attaching heat generating equipment in accordance with an illustrative embodiment;
**Figure 15** is a flowchart of a method of attaching heat generating equipment to an exterior of an aircraft in accordance with an illustrative embodiment;
**Figure 16** is a flowchart of a method of attaching heat generating equipment to an exterior of an aircraft in accordance with an illustrative embodiment;
**Figure 17** is a flowchart of a method of retrofitting a radome for covering heat generating equipment on an aircraft in accordance with an illustrative embodiment;
**Figure 18** is an illustration of an aircraft manufacturing and service method in a form of a block diagram in accordance with an illustrative embodiment; and
**Figure 19** is an illustration of an aircraft in a form of a block diagram in which an illustrative embodiment may be implemented.

### DETAILED DESCRIPTION

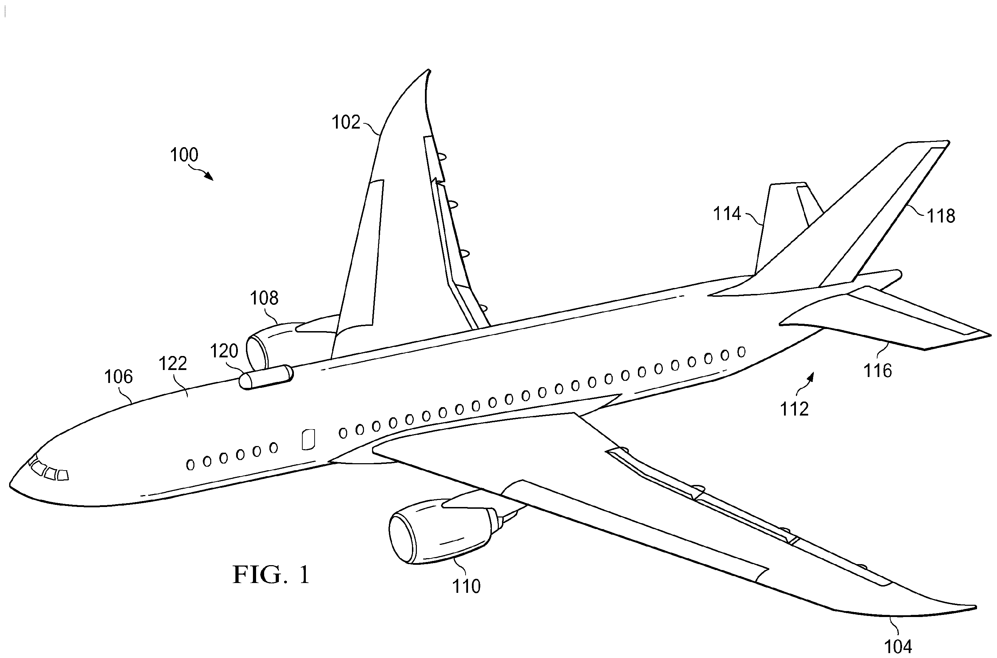

Turning now to **Figure 1****,** an illustration of an aircraft is depicted in accordance with an illustrative embodiment. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have heat generating equipment mounted to body **106** according to the illustrative examples. For example, mounting system **120** can be a physical implementation of a mounting system with heat generating equipment. The illustrative examples can be used to mount electronic antennas or any other desirable type of heat generating equipment to body **106** of aircraft **100.**

Skin **122** of aircraft **100** has an upper temperature threshold. Depending upon the environmental temperature, environmental conditions, paint and other surface treatments on skin **122,** and operational conditions for the heat generating equipment, it can be possible to reach undesirably high temperatures, and possibly the upper temperature threshold. The illustrative examples provide a mounting system, mounting system **120,** that reduces the heat transferred to skin **122** of aircraft **100** from the heat generating equipment. Mounting system **120** stops skin **122** from reaching the upper temperature limit due to the heat generating equipment.

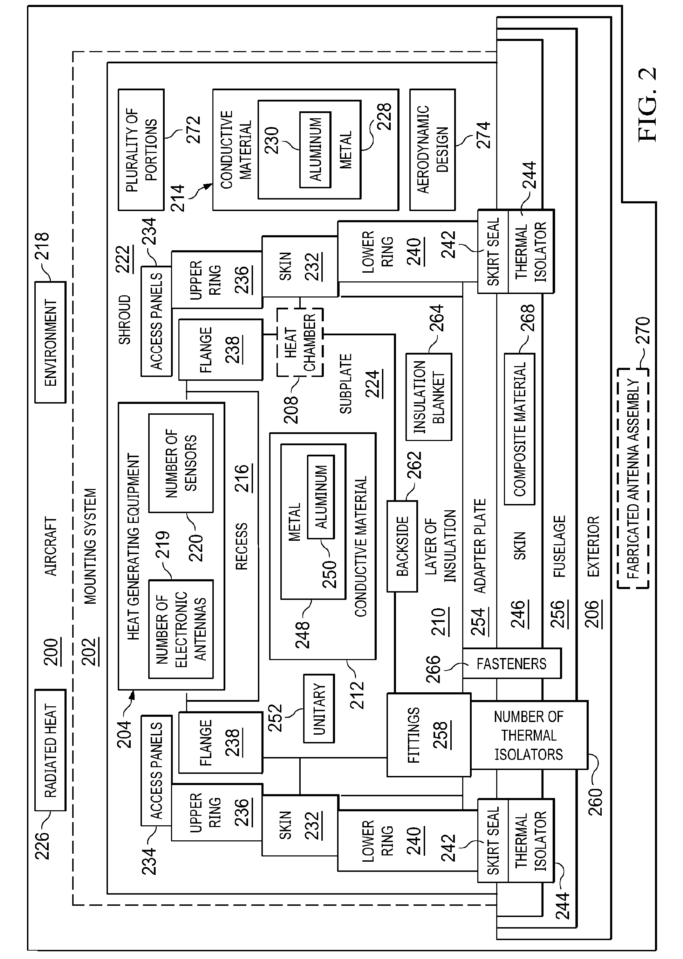

Turning now to **Figure 2****,** an illustration of a block diagram of an aircraft with a mounting system is depicted in accordance with an illustrative embodiment. Aircraft **100** can be a physical implementation of aircraft **200** of **Figure 2****.**

Mounting system **202** is configured to attach heat generating equipment **204** to exterior **206** of aircraft 200. Mounting system **202** comprises heat chamber **208,** heat generating equipment **204,** and layer of insulation **210.** Heat chamber **208** is formed by a number of conductive materials, conductive material **212** and conductive material **214.** Heat chamber **208** has recess **216** open to environment **218** outside aircraft **200.** Heat generating equipment **204** is secured within recess **216.** Layer of insulation **210** is between heat chamber **208** and aircraft **200.** Layer of insulation **210** is positioned on an opposite side of heat chamber **208** than an opening of recess **216.**

Layer of insulation **210** is present to reduce transmission of heat from heat generating equipment **204** to skin **246** of fuselage **256.** In some illustrative examples, skin **246** is formed of composite material **268.** It is desirable to reduce heat transferred to composite material **268** during operation of aircraft **200** and heat generating equipment **204.**

Skin **246** of aircraft **200** has an upper temperature threshold. Depending upon the environmental temperature, environmental conditions, paint and other surface treatments on skin **246,** and operational conditions for heat generating equipment **204,** it can be possible to reach undesirably high temperatures, and possibly the upper temperature threshold. Mounting system **202** reduces the heat transferred to skin **246** of aircraft **200** from heat generating equipment **204.** Mounting system **202** stops skin **246** from reaching the upper temperature limit due to the heat generating equipment **204.**

Layer of insulation **210** is provided to shield adapter plate **254** and the underlying aircraft structures, such as skin **246** of fuselage **256,** from heat generated by heat generating equipment **204** held by mounting system **202.** Layer of insulation **210** can take any desirable form. In some illustrative examples, layer of insulation **210** takes the form of insulation blanket **264.** In some illustrative examples, insulation blanket **264** is the same as material used in hot propulsion insulating locations. In some illustrative examples, layer of insulation **210** has a service temperature of 450 degrees Fahrenheit (i.e. 232°C).

Heat generating equipment **204** takes any desirable form of heat generating equipment that is desirably secured to exterior **206** of aircraft **200.** In some illustrative examples, heat generating equipment **204** comprises number of electronic antennas **219.** In some illustrative examples, heat generating equipment **204** comprises number of sensors **220.**

In some illustrative examples, heat chamber **208** is formed by two or more components joined together. In some illustrative examples, heat chamber **208** is formed by shroud **222** and subplate **224.** Shroud **222** is configured to cover layer of insulation **210.** Shroud **222** is the portion of mounting system **202** exposed to environment **218** outside of aircraft **200.** Shroud **222** can also be referred to as a shell or a cover. Shroud **222** is configured to provide aerodynamic design **274.**

Shroud **222** is formed of conductive material **214.** By being formed of conductive material **214,** shroud **222** provides lightning strike protection. By being formed of conductive material **214,** shroud **222** provides a path for radiated heat **226** to exit mounting system **202.** In some illustrative examples, shroud **222** is referred to as a "radiator." Radiated heat **226** is heat generated by heat generating equipment **204** and substantially isolated in heat chamber **208** by layer of insulation **210.**

In some illustrative examples, conductive material **214** comprises metal **228.** In some illustrative examples, metal **228** is aluminum **230.** Conductive material **214** is selected taking into account at least one of weight, machinability, wearability, conductivity, and other material properties.

Shroud **222** has any desirable design configured to cover portions of mounting system **202** while leaving heat generating equipment **204** exposed to environment **218.** In some illustrative examples, shroud **222** comprises a plurality of portions secured together. In some illustrative examples, shroud **222** comprises skin **232** and access panels **234.** Skin **232** and access panels **234** are connected in any desirable fashion.

In some illustrative examples, skin **232** and access panels **234** are connected by upper ring **236.** In some illustrative examples, upper ring **236** connects skin **232** to subplate **224.** In some illustrative examples, upper ring **236** is directly connected to flange **238** of subplate **224** and skin **232.** In some illustrative examples, upper ring **236** can be referred to as an upper bracket or a connecting bracket. Flange **238** of subplate **224** is secured to shroud **222.**

As depicted, shroud **222** further comprises lower ring **240.** In some illustrative examples, skin **232** is connected to adapter plate **254** by lower ring **240.** In some illustrative examples, lower ring **240** can be referred to as a lower bracket or a connecting bracket.

As depicted, mounting system **202** further comprises skirt seal **242** connected to lower ring **240** of shroud **222.** Skirt seal **242** seals mounting system **202** against liquid.

In some illustrative examples, a number of thermal isolators, thermal isolator **244,** is positioned between shroud **222** and skin **246** of aircraft **200.** As depicted, mounting system further comprises thermal isolator **244** positioned between lower ring **240** and skin **246** of the aircraft. Thermal isolator **244** is provided to prevent conduction of heat from shroud **222** to skin **246** of aircraft **200.**

Subplate **224** is configured to support heat generating equipment **204** and forms a bottom portion of heat chamber **208.** Subplate **224** is formed of conductive material **212.** Subplate **224** conducts heat from heat generating equipment **204** into shroud **222** for dissipation of heat to environment **218** as radiated heat **226.**

In some illustrative examples, conductive material **212** comprises metal **248.** In some illustrative examples, metal **248** is aluminum **250.** In some illustrative examples, subplate **224** is a unitary **252** structure. In some illustrative examples, subplate **224** is a unitary **252** metal **248** structure.

In some illustrative examples, subplate **224** comprises recess **216** and flange **238** surrounding recess **216.** Recess **216** can hold any desirable type or design of heat generating equipment. Recess **216** can hold a variety of different designs of electronic antennas. In some illustrative examples, recess **216** holds number of sensors **220.** As recess **216** is designed to hold any desired heat generating equipment **204,** subplate **224** may be referred to as a universal component.

Subplate **224** is secured to adapter plate **254.** Adapter plate **254** is configured to connect components to skin **246** of aircraft **200.** Adapter plate **254** is configured to mount directly to fuselage **256** of aircraft **200.** Adapter plate **254** is connected to fuselage **256** by fasteners **266.** Fasteners **266** take the form of any desirable type of fasteners. In some illustrative examples, adapter plate **254** is a common component to several different designs of aircraft. In some illustrative examples, adapter plate **254** has a design common to mounting different types of components other than mounting system **202.**

In some illustrative examples, aircraft **200** is already in operation and adapter plate **254** is an existing structure of aircraft **200.** In some of these illustrative examples, adapter plate **254** was already present on aircraft **200** and the remaining components of mounting system **202** are retrofit onto adapter plate **254.** As a result of being used for multiple functions, the possibility of retrofit, and use across multiple aircraft designs, adapter plate **254** may be referred to as a universal adapter.

Fittings **258** connect subplate **224** to adapter plate **254.** Fittings **258** pierce layer of insulation **210.** In some illustrative examples, number of thermal isolators **260** are positioned between subplate **224** and adapter plate **254.** In some illustrative examples, number of thermal isolators **260** are associated with fittings **258** to reduce conduction of heat from subplate **224** to adapter plate **254.**

A number of thermal isolators, thermal isolator **244,** is positioned between heat chamber **208** and aircraft **200.** Thermal isolator **244** reduces or prevents transfer of heat from heat chamber **208** to aircraft **200.**

In some illustrative examples, mounting system **202** for attaching heat generating equipment **204** to exterior **206** of aircraft **200** comprises subplate **224,** heat generating equipment **204,** and layer of insulation **210.** Subplate **224** has recess **216** surrounded by flange **238.** Subplate **224** is formed of conductive material **212.** Heat generating equipment **204** is positioned within recess **216.** Layer of insulation **210** is secured to backside **262** of the subplate. In some illustrative examples, heat generating equipment **204** comprises number of electronic antennas **219.**

In some illustrative examples, shroud **222** comprises a plurality of portions secured together. Shroud **222** is formed of conductive material **214** and is configured to provide an aerodynamic design.

In some illustrative examples, plurality of portions **272** of shroud **222** comprises skin **232** and access panels **234.** Skin **246** is secured to adapter plate **254** configured to connect components to skin **246** of aircraft **200.** Access panels **234** are designed to accommodate cross-sectional shapes of heat generating equipment **204.**

The illustration of aircraft **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, although not depicted, thermal isolation is provided between heat chamber **208** and adapter plate **254.** For example, insulating portions are positioned between shroud **222** and adapter plate **254.** Although the number of thermal isolators positioned between shroud **222** and skin **246** of aircraft **200** is depicted as thermal isolator **244,** the number of thermal isolators can include more than one thermal isolator.

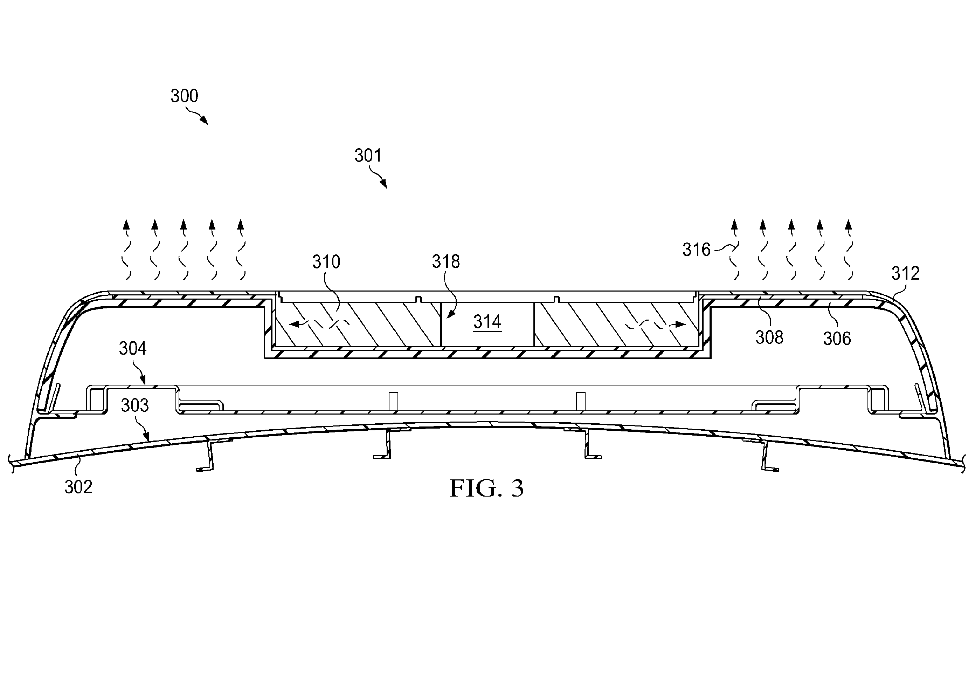

Turning now to **Figure 3****,** an illustration of a cross-sectional view of a mounting system for attaching heat generating equipment is depicted in accordance with an illustrative embodiment. View **300** of mounting system **301** is a cross-sectional view with mounting system **301** mounted to skin **302** of aircraft **303.**

Mounting system **301** is a physical implementation of mounting system **202** of **Figure 2****.** In view **300,** adapter plate **304** is connected to aircraft **303.** Layer of insulation **306** is positioned between subplate **308** and adapter plate **304.** Layer of insulation **306** reduces or prevents conduction of heat from heat generating equipment **310** to adapter plate **304** and skin **302** of aircraft **303.**

Shroud **312** is connected to adapter plate **304** and subplate **308.** Shroud **312** provides an outer shell for mounting system **301.** Shroud **312** provides lightning protection, heat dissipation, and aerodynamic properties.

Subplate **308** and shroud **312** form heat chamber **314.** Heat chamber **314** has heat from heat generating equipment **310.** Heat chamber **314** is thermally isolated from adapter plate **304** and skin **302** of aircraft **303** by layer of insulation **306.** In some illustrative examples, additional thermal isolators are positioned at connecting points of shroud **312** to adapter plate **304.** In some illustrative examples, additional thermal isolators are positioned at connecting points of subplate **308** to adapter plate **304.**

Heat exits heat chamber **314** as radiated heat **316.** Radiated heat **316** exits recess **318** in subplate **308.** Radiated heat **316** also radiates from the conductive material of shroud **312.**

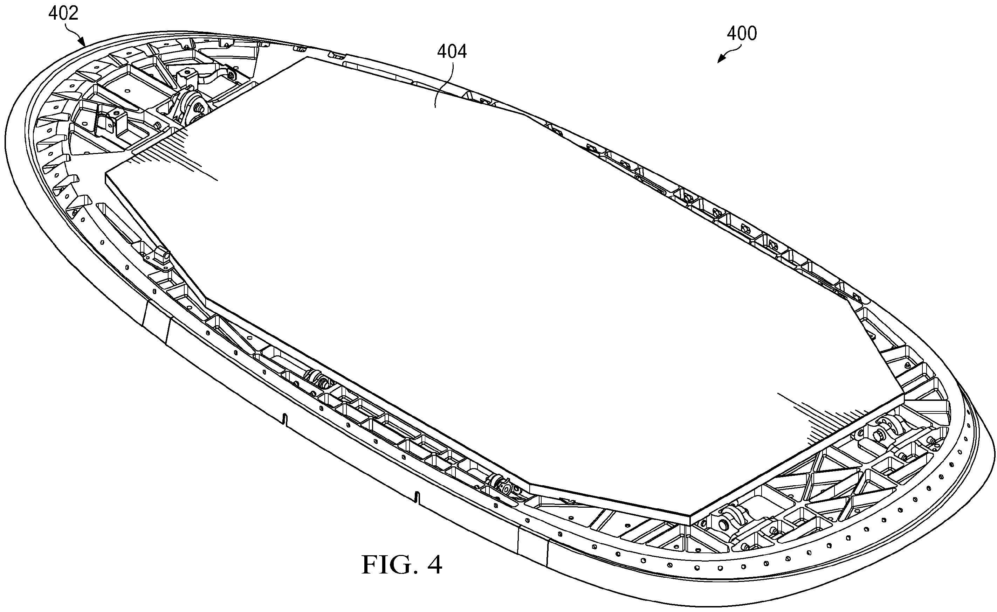

Turning now to **Figure 4****,** an illustration of an isometric view of portions of a mounting system for attaching heat generating equipment is depicted in accordance with an illustrative embodiment. Mounting system **400** comprises adapter plate **402** and layer of insulation **404.** Adapter plate **402** is a physical implementation of adapter plate **254** of **Figure 2****.** Layer of insulation **404** is a physical implementation of layer of insulation **210** of **Figure 2****.**

Adapter plate **402** is configured to mount directly to a fuselage of an aircraft. Adapter plate **402** can already be present on an aircraft if other components of mounting system **400** are a retrofit. In some illustrative examples, adapter plate **402** has a design common to multiple designs of aircraft. As a result of being used for multiple functions, the possibility of retrofit, and use across multiple aircraft designs, adapter plate **402** may be referred to as a universal adapter.

Layer of insulation **404** is provided to shield adapter plate **402** and the underlying aircraft structures from heat generated by heat generating equipment held by mounting system **400.** In some illustrative examples, layer of insulation **404** takes the form of an insulation blanket. Although layer of insulation **404** is shown as applied to adapter plate **402** as a first step, in other illustrative examples, layer of insulation **404** can be connected first to an additional component, such as subplate **224** of **Figure 2****.** In some illustrative examples, layer of insulation **404** is part of fabricated antenna assembly **270** of **Figure 2** which is connected to adapter plate **402** as one section.

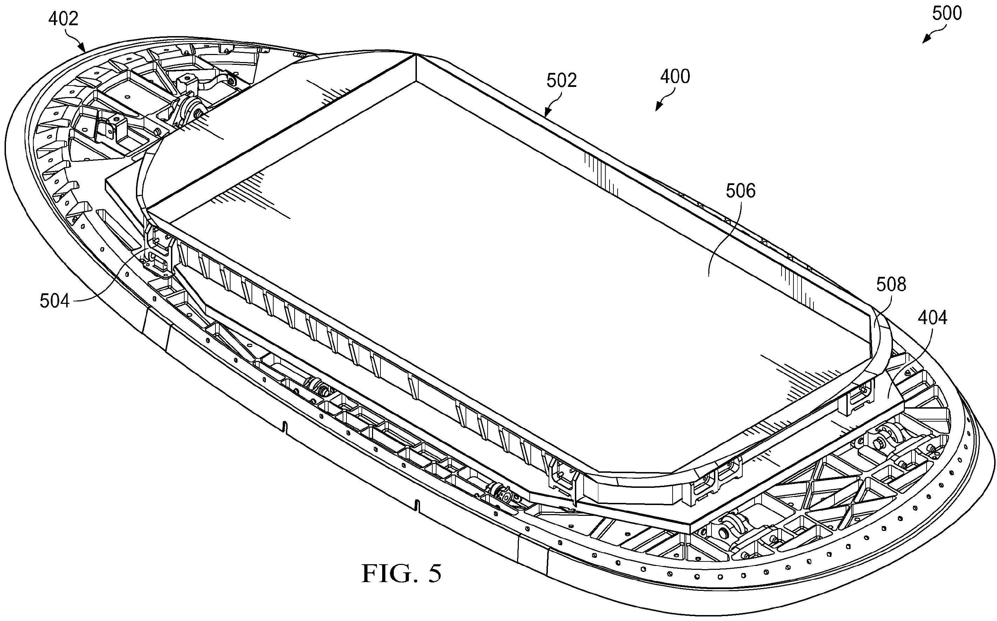

Turning now to **Figure 5****,** an illustration of an isometric view of portions of a mounting system for attaching heat generating equipment is depicted in accordance with an illustrative embodiment. In view **500** of mounting system **400,** subplate **502** is also depicted. Subplate **502** is connected to adapter plate **402** by fittings **504.** Fittings **504** extend through layer of insulation **404.** Sealant (not depicted) will be applied to seal layer of insulation **404** at locations where fittings **504** extend through layer of insulation **404.** The sealant discourages entry of liquids into layer of insulation **404.** In some illustrative examples, the sealant is also insulative such that heat does not extend through layer of insulation **404** at locations of fittings **504.**

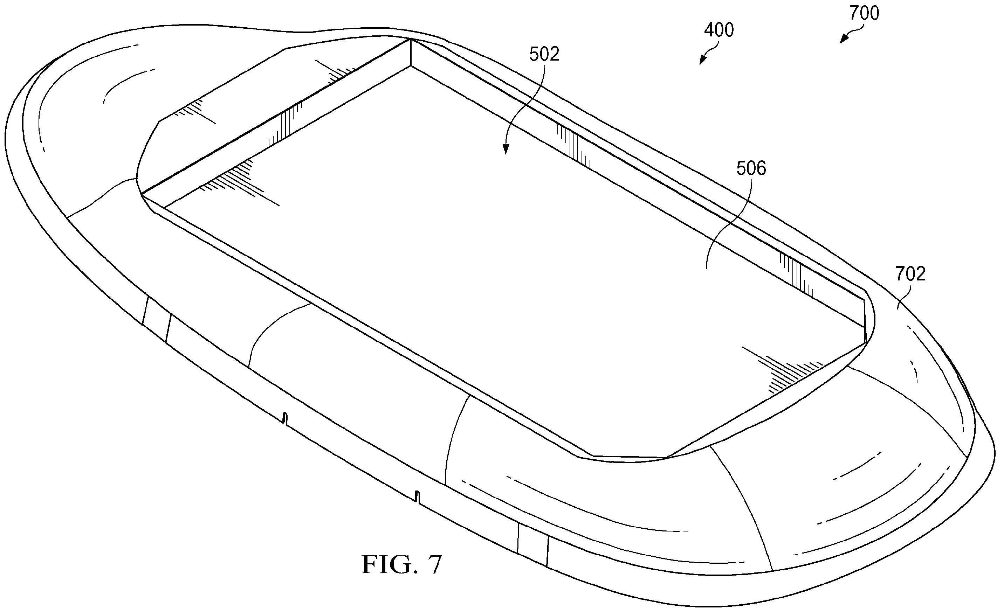

Subplate **502** is configured to support heat generating equipment such as sensors or antennas. Subplate **502** comprises recess **506.** When assembled, the heat generating equipment is positioned within recess **506.** Flange **508** extends around recess **506.** Flange **508** is configured for securing subplate **502** to a shroud, such as shroud portion **702** depicted in **Figure 7****.**

As depicted, subplate **502** is a unitary structure. Subplate **502** is formed of a single piece of conductive material. Subplate **502** is configured to form a portion of a heating chamber of mounting system **400.**

Subplate **502** is configured to support any desired type of heat generating equipment. Subplate **502** can be described as a universal component.

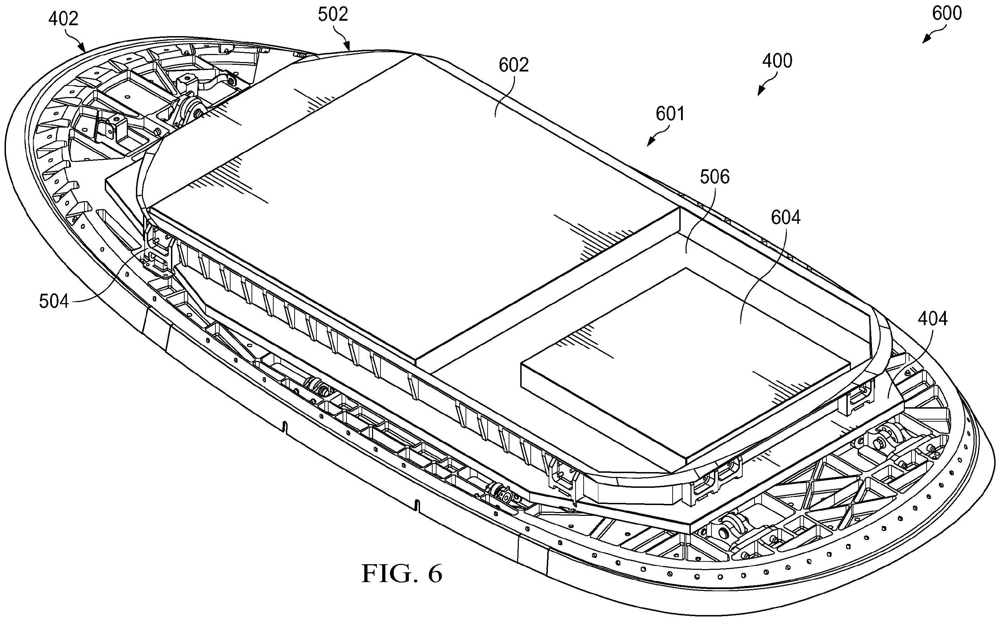

Turning now to **Figure 6****,** an illustration of an isometric view of portions of a mounting system for attaching heat generating equipment is depicted in accordance with an illustrative embodiment. View **600** is a view of mounting system **400** with heat generating equipment **601** within recess **506** of subplate **502.** In this illustrative example, heat generating equipment **601** comprises electronic antenna **602** and electronic antenna **604.** In view **600,** electronic antenna **602** and electronic antenna **604** are positioned within recess **506** of subplate **502.**

In some illustrative examples, layer of insulation **404,** subplate **502,** and heat generating equipment **601** are assembled into a prefabricated antenna assembly prior to connecting subplate **502** to adapter plate **402.** By securing heat generating equipment **601** in subplate **502** prior to securing subplate **502** to adapter plate **402,** assembly time on the final assembly line can be reduced. Connecting heat generating equipment **601** offline can reduce manufacturing time.

Turning now to **Figure 7****,** an illustration of an isometric view of portions of a mounting system for attaching heat generating equipment is depicted in accordance with an illustrative embodiment. In view **700** of mounting system **400,** shroud portion **702** has been connected to subplate **502** and adapter plate **402** of **Figure 4****.** Although shroud portion **702** appears to be one component, shroud portion **702** can be formed of multiple components connected together. In some illustrative examples, shroud portion **702** comprises a skin.

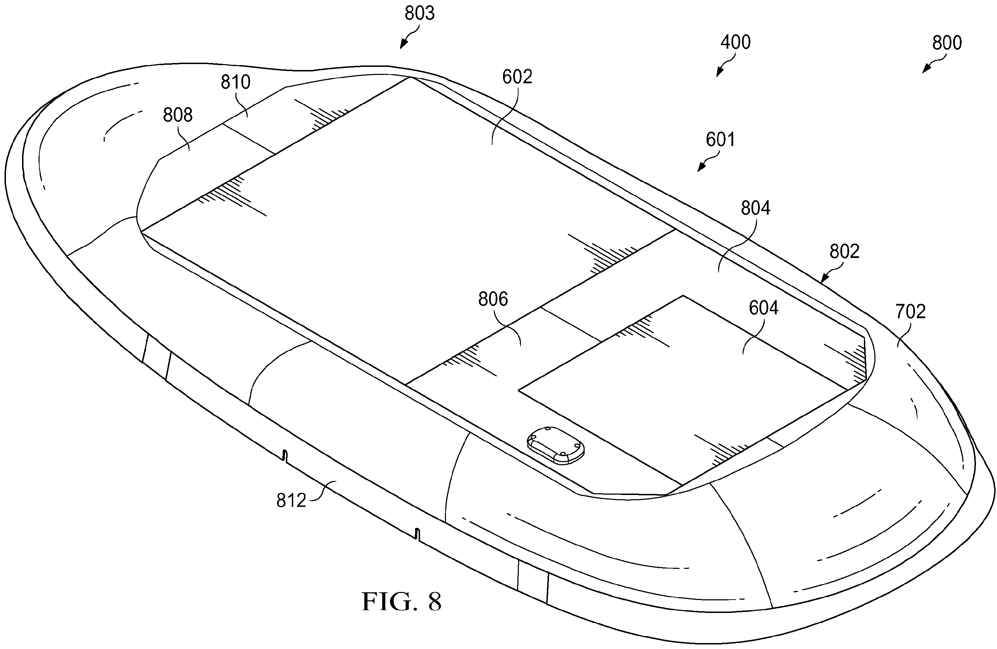

Turning now to **Figure 8****,** an illustration of an isometric view of portions of a mounting system for attaching heat generating equipment is depicted in accordance with an illustrative embodiment. View **800** of mounting system **400** is a fully assembled system.

In view **800,** shroud **802** comprises shroud portion **702** and access panels **803.** Access panels **803** are configured based on the design and location of heat generating equipment **601.** By having access panels **803,** shroud portion **702** can be used for any type or design of heat generating equipment that can be present in recess **506** of subplate **502.** Access panels **803** include access panel **804,** access panel **806,** access panel **808,** and access panel **810.** Each of shroud portion **702** and access panels **803** is connected to subplate **502.**

Skirt seal **812** is connected to shroud portion **702.** Skirt seal **812** is configured to seal to a fuselage of an aircraft to reduce fluid intrusion into mounting system **400.**

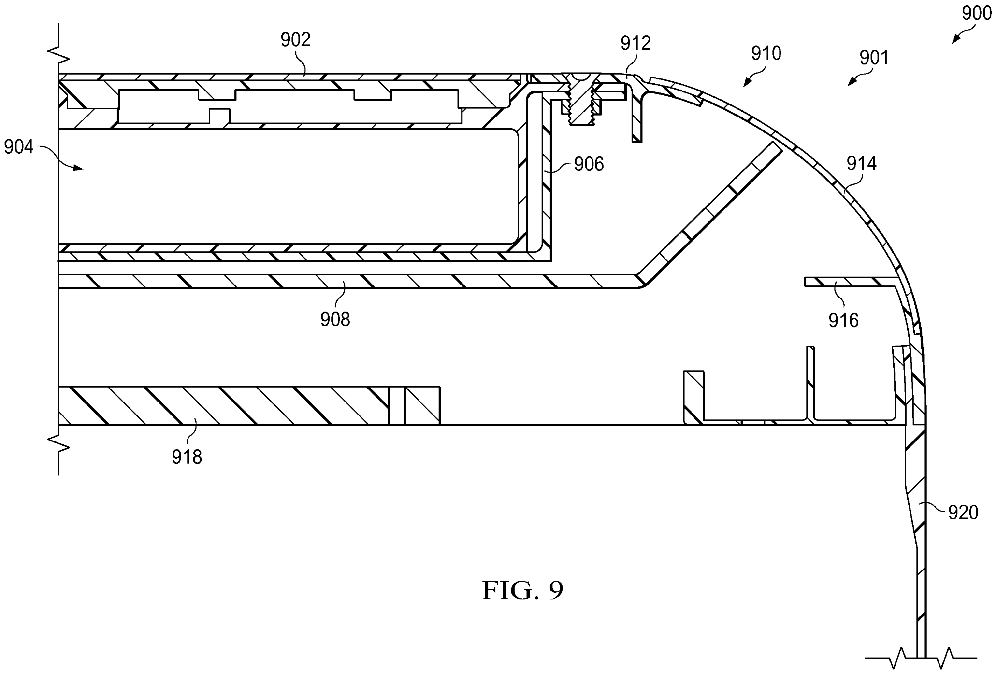

Turning now to **Figure 9****,** an illustration of a cross-sectional view of portions of a mounting system for attaching heat generating equipment is depicted in accordance with an illustrative embodiment. View **900** is a cross-sectional view of mounting system **901.** Mounting system **901** is a physical implementation of mounting system **202** of **Figure 2****.** Mounting system **901** can be the same as mounting system **301** of **Figure 3****.** Mounting system **901** can be the same as mounting system **400** of **Figures 4-8****.**

In view **900** of mounting system **901,** heat generating equipment **904** takes the form of number of electronic antennas **902.** Number of electronic antennas **902** is positioned in subplate **906.** Number of electronic antennas **902** is exposed to the environment outside of mounting system **901.**

Subplate **906** is connected to shroud **910.** Shroud **910** comprises upper ring **912,** skin **914,** and lower ring **916.** Shroud **910** is connected to adapter plate **918.**

Although not depicted in view **900,** subplate **906** is connected to adapter plate **918** in discrete locations. Although not depicted in view **900,** adapter plate **918** is mounted to a fuselage of an aircraft.

Shroud **910,** subplate **906,** and layer of insulation **908** form a heat chamber. Layer of insulation **908** reduces the heat traveling from heat chamber to aircraft structures beneath layer of insulation **908.** Layer of insulation **908** reduces the heat transferred from heat generating equipment **904** to adapter plate **918** and the aircraft skin (not depicted) beneath adapter plate **918.** Additionally, a distance between subplate **906** and adapter plate **918** reduces the heat reaching adapter plate **918.** The distance between subplate **906** and adapter plate **918** provides passive control of the heat experienced by adapter plate **918.** Skirt seal and thermal isolator **920** reduces heat transferred from shroud **910** to the fuselage.

Heat generated by heat generating equipment **904** is radiated to the environment outside of mounting system **901.** Heat generating equipment **904** directly radiates heat to the environment. Additionally, heat radiates out from shroud **910.**

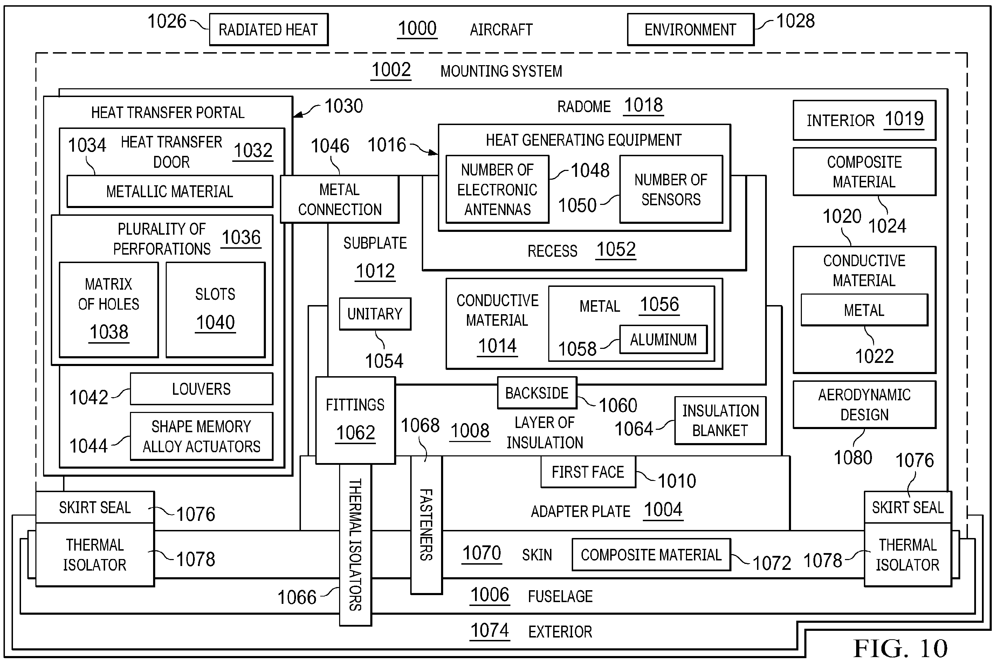

Turning now to **Figure 10****,** an illustration of a block diagram of an aircraft with a mounting system is depicted in accordance with an illustrative embodiment. Aircraft **100** can be a physical implementation of aircraft **1000** of **Figure 10****.**

Mounting system **1002** is configured to attach heat generating equipment **1016** to exterior **1074** of aircraft **1000.** Mounting system **1002** comprises adapter plate **1004,** layer of insulation **1008,** subplate **1012,** heat generating equipment **1016,** and radome **1018.** Adapter plate **1004** is connected to fuselage **1006** of aircraft **1000.** Layer of insulation **1008** substantially covers first face **1010** of adapter plate **1004.** Subplate **1012** is formed of conductive material **1014** and is connected to adapter plate **1004** such that layer of insulation **1008** is positioned between subplate **1012** and adapter plate **1004.** Heat generating equipment **1016** is secured within subplate **1012.** Radome **1018** is connected to adapter plate **1004** and positioned to cover heat generating equipment **1016** and subplate **1012.** In some illustrative examples, layer of insulation **1008** is in contact with backside **1060** of subplate **1012.**

Layer of insulation **1008** is present to reduce transmission of heat from heat generating equipment **1016** to skin **1070** of fuselage **1006.** In some illustrative examples, skin **1070** is formed of composite material **1072.** It is desirable to reduce heat transferred to composite material **1072** during operation of aircraft **1000** and heat generating equipment **1016.**

Skin **1070** of aircraft **1000** has an upper temperature threshold. Depending upon the environmental temperature, environmental conditions, paint and other surface treatments on skin **1070,** and operational conditions for heat generating equipment **1016,** it can be possible to reach undesirably high temperatures, and possibly the upper temperature threshold. Mounting system **1002** reduces the heat transferred to skin **1070** of aircraft **1000** from heat generating equipment **1016.** Mounting system **1002** stops skin **1070** from reaching the upper temperature limit due to the heat generating equipment **1016.**

Layer of insulation **1008** is provided to shield adapter plate **1004** and the underlying aircraft structures, such as skin **1070** of fuselage **1006,** from heat generated by heat generating equipment **1016** held by mounting system **1002.** Layer of insulation **1008** can take any desirable form. In some illustrative examples, layer of insulation **1008** takes the form of insulation blanket **1064.** In some illustrative examples, insulation blanket **1064** is the same as material used in hot propulsion insulating locations. In some illustrative examples, layer of insulation **1008** has a service temperature of 450 degrees Fahrenheit (i.e. 232°C).

Radome **1018** is connected to adapter plate **1004** such that heat generating equipment **1016** is positioned within interior **1019** of radome **1018.** Radome **1018** is connected to adapter plate **1004** with thermal isolator **1078** to reduce or prevent heat transfer from radome **1018** to adapter plate **1004,** skin **1070,** and fuselage **1006.** Skirt seal **1076** seals radome **1018** to skin **1070** to reduce liquid entry into interior **1019** of radome **1018.**

In some illustrative examples, radome **1018** is formed of conductive material **1020.** Conductive material **1020** can take the form of metal **1022.** When radome **1018** is formed of conductive material **1020,** heat from heat generating equipment **1016** can escape radome **1018** as radiated heat **1026** into environment **1028** outside of radome **1018.** In some illustrative examples, when radome **1018** is formed of conductive material **1020,** radome **1018** can have a conventional design. In some illustrative examples, when radome **1018** is formed of conductive material **1020,** radome **1018** does not have any additional heat dissipating design or features.

In some illustrative examples, radome **1018** is formed of composite material **1024.** In some illustrative examples, heat transfer portal **1030** extends through radome **1018.** Heat transfer portal **1030** is an opening within radome **1018.** When present, heat transfer portal **1030** provides a pathway for heat to exit from interior **1019** of radome **1018.**

In some illustrative examples, radome **1018** is an off-the-shelf part. When radome **1018** is an off-the-shelf part, heat transfer portal **1030** is cut into radome **1018.** In some illustrative examples, radome **1018** is designed and manufactured for mounting system **1002.** In some illustrative examples, when radome **1018** is manufactured for mounting system **1002,** heat transfer portal **1030** can be formed into radome **1018** during manufacturing. For example, when radome **1018** is formed of composite material **1024,** heat transfer portal **1030** can be formed during layup of composite material **1024.**

Radome **1018** is configured with aerodynamic design **1080.** In some illustrative examples, heat transfer portal **1030** is present in an aft section of radome **1018.** Having heat transfer portal **1030** in an aft section of radome **1018** can reduce drag in aerodynamic design **1080.**

In some illustrative examples, heat transfer door **1032** is present in mounting system **1002.** In some illustrative examples, heat transfer door **1032** is positioned within heat transfer portal **1030.** Heat transfer door **1032** is configured to transfer heat from interior **1019** of radome **1018** to environment **1028** outside of mounting system **1002.**

In some illustrative examples, heat transfer door **1032** comprises metallic material **1034** with plurality of perforations **1036** in metallic material **1034.** Plurality of perforations **1036** is configured to allow heat to escape interior **1019** via plurality of perforations **1036.**

In some illustrative examples, perforations of plurality of perforations **1036** take the form of one of matrix of holes **1038,** plurality of slots **1040,** or plurality of overlapping louvers **1042.**

Matrix of holes **1038** includes any desirable layout of holes. In some illustrative examples, matrix of holes **1038** can include columns and rows of holes. In some illustrative examples, matrix of holes **1038** can include staggered rows of holes. The holes of matrix of holes **1038** can have any desirable shape. In some illustrative examples, the holes of matrix of holes **1038** can be at least one of round, square, elliptical, triangular, or any other desirable shape of hole. Plurality of slots **1040** can have any desirable layout and any desirable dimensions.

In some illustrative examples, heat transfer door **1032** comprises louvers **1042.** In these illustrative examples, louvers **1042** can radiate heat to environment **1028.** When present, louvers **1042** increase surface area of metallic material **1034** to radiate heat to environment **1028** from heat transfer door **1032.** In some illustrative examples, louvers **1042** are stationary. When louvers **1042** are stationary, the angle of louvers **1042** is fixed. In some illustrative examples, louvers **1042** are moveable. When louvers **1042** are moveable, the angle of louvers **1042** is adjustable.

In some illustrative examples, heat transfer door **1032** comprises actuators connected to louvers **1042.** In some illustrative examples, heat transfer door **1032** comprises shape memory alloy actuators **1044.**

In some illustrative examples, heat travels within interior **1019** of radome **1018** to exit through heat transfer door **1032.** In some illustrative examples, mounting system **1002** comprises metal connection **1046** positioned between heat transfer door **1032** and subplate **1012.** In some illustrative examples, metal connection **1046** is configured to conduct heat between subplate **1012** and heat transfer door **1032.**

Heat generating equipment **1016** takes any desirable form of heat generating equipment that is desirably secured to exterior **1074** of aircraft **1000.** In some illustrative examples, heat generating equipment **1016** comprises number of electronic antennas **1048.** In some illustrative examples, heat generating equipment **1016** comprises number of sensors **1050.** Heat generating equipment **1016** is positioned within recess **1052** in subplate **1012.**

Subplate **1012** is connected to adapter plate **1004.** In some illustrative examples, subplate **1012** is formed of conductive material **1014.** In some illustrative examples, conductive material **1014** takes the form of metal **1056** such as aluminum **1058.** In some illustrative examples, subplate **1012** is a unitary **1054** metal **1056** structure.

Subplate **1012** is secured to adapter plate **1004.** Adapter plate **1004** is configured to connect components to skin **1070** of aircraft **1000.** Adapter plate **1004** is configured to mount directly to fuselage **1006** of aircraft **1000.** Adapter plate **1004** is connected to fuselage **1006** by fasteners **1068.** Fasteners **1068** take the form of any desirable type of fasteners. In some illustrative examples, adapter plate **1004** is a common component to several different designs of aircraft. In some illustrative examples, adapter plate **1004** has a design common to mounting different types of components other than mounting system **1002.**

Subplate **1012** is connected to adapter plate **1004** by fittings **1062** that extend through layer of insulation **1008.** In some illustrative examples, thermal isolators **1066** reduce transfer of heat from subplate **1012** to adapter plate **1004** through fittings **1062.**

The illustration of aircraft **1000** in **Figure 10** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, although only one heat transfer door is depicted, other non-depicted examples can include more than one heat transfer door. As another example, fasteners are not depicted for radome **1018,** but fasteners will connect radome **1018** to adapter plate **1004.**

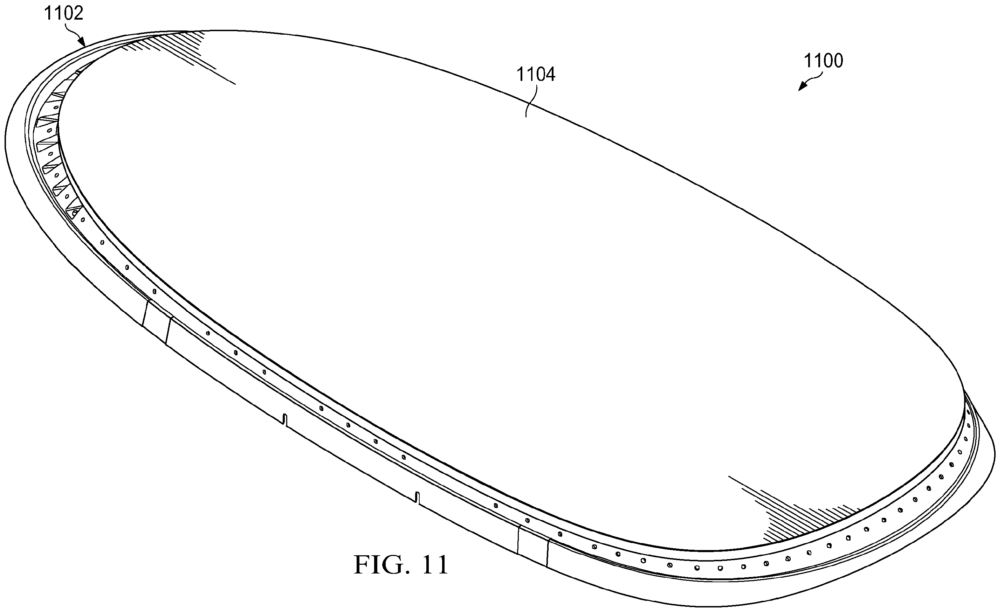

Turning now to **Figure 11****,** an illustration of an isometric view of portions of a mounting system for attaching heat generating equipment is depicted in accordance with an illustrative embodiment. Mounting system **1100** is a physical implementation of mounting system **1002** of Figure **10****.** Mounting system **1100** can be used to mount heat generating equipment on aircraft **100** of Figure **1****.**

Mounting system **1100** comprises adapter plate **1102** and layer of insulation **1104.** Adapter plate **1102** is configured to mount components to an exterior of an aircraft, such as aircraft **1000** of Figure **10****.** Adapter plate **1102** can be used to mount any desirable components to the exterior of the aircraft. Layer of insulation **1104** is positioned to cover a first face of adapter plate **1102.** Layer of insulation **1104** to reduce or prevent heat from traveling to adapter plate **1102.**

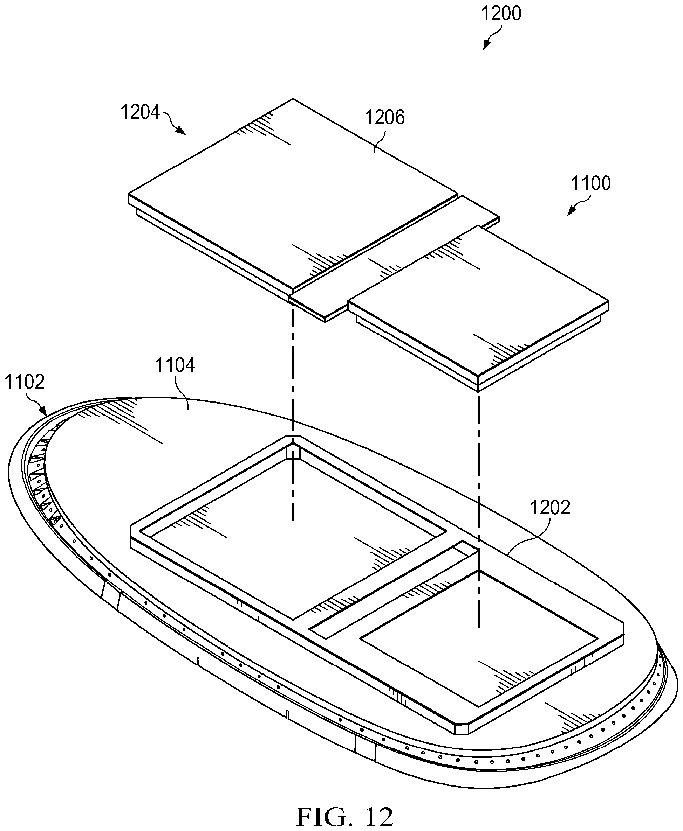

Turning now to **Figure 12****,** an illustration of an isometric view of portions of a mounting system for attaching heat generating equipment is depicted in accordance with an illustrative embodiment. In view **1200,** subplate **1202** is present over layer of insulation **1104.** Subplate **1202** is connected to adapter plate **1102.** Layer of insulation **1104** extends between subplate **1202** and adapter plate **1102.**

Heat generating equipment **1204** is shown exploded over subplate **1202.** In this illustrative example, heat generating equipment **1204** takes the form of number of electronic antennas **1206.** Number of electronic antennas **1206** will be connected to subplate **1202.**

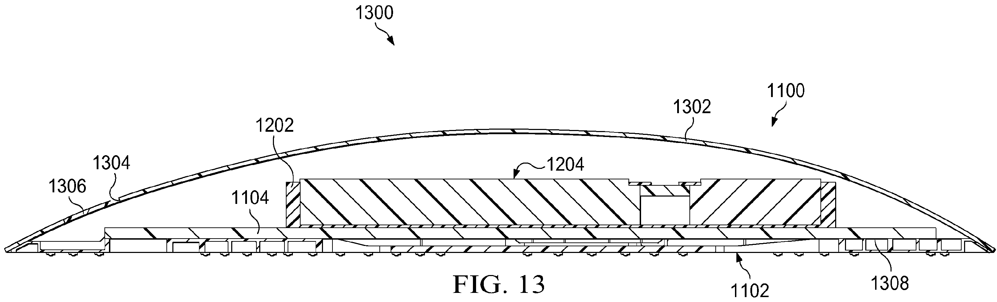

Turning now to **Figure 13****,** an illustration of a cross-sectional view of a mounting system for attaching heat generating equipment is depicted in accordance with an illustrative embodiment. In view **1300** radome **1302** has been connected to adapter plate **1102** in mounting system **1100.** Radome **1302** is a physical implementation of radome **1018** of Figure **10****.** Radome **1302** is connected to adapter plate **1102** and is positioned to cover heat generating equipment **1204** and subplate **1202.**

Layer of insulation **1104** is positioned over first face **1308** of adapter plate **1102.** Number of electronic antennas **1206** are connected in subplate **1202.**

In this illustrative example, heat transfer portal **1304** is present in radome **1302.** Heat transfer portal **1304** is an opening formed in radome **1302.** Heat transfer portal **1304** can be formed through at least one of machining, molding, or material layup. In this illustrative example, heat transfer door **1306** is present in heat transfer portal **1304.** Heat transfer door **1306** is configured to radiate heat from radome **1302.** Heat transfer door **1306** is formed of a metallic material to radiate heat to an environment outside of radome **1302.** Heat transfer door **1306** comprises a plurality of perforations (not depicted) to allow heat to escape from radome **1302.** The plurality of perforations includes any desirable quantity, positioning, size, and shape of perforations. In other non-depicted examples, heat transfer door **1306** can comprise a plurality of louvers.

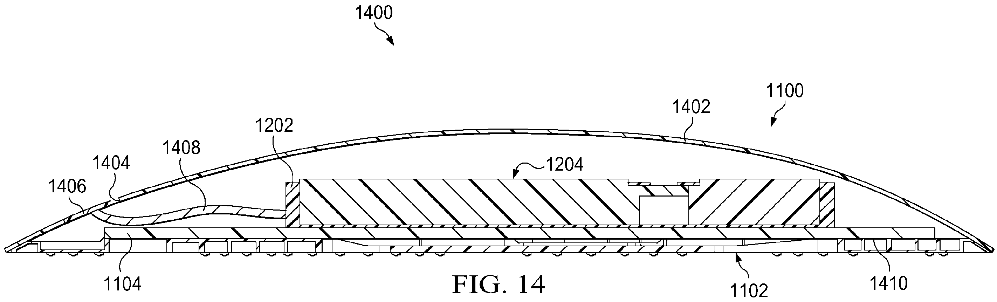

Turning now to **Figure 14****,** an illustration of a cross-sectional view of a mounting system for attaching heat generating equipment is depicted in accordance with an illustrative embodiment. In view **1400** radome **1402** has been connected to adapter plate **1102** in mounting system **1100.** Radome **1402** is a physical implementation of radome **1018** of Figure **10****.** Radome **1402** is connected to adapter plate **1102** and is positioned to cover heat generating equipment **1204** and subplate **1202.**

Layer of insulation **1104** is positioned over first face **1410** of adapter plate **1102.** Heat generating equipment **1204** is connected in subplate **1202.**

In this illustrative example, heat transfer portal **1404** is present in radome **1402.** Heat transfer portal **1404** is an opening formed in radome **1402.** Heat transfer portal **1404** can be formed through at least one of machining, molding, or material layup. In this illustrative example, heat transfer door **1406** is present in heat transfer portal **1404.** Heat transfer door **1406** is configured to radiate heat from radome **1402.** Heat transfer door **1406** is formed of a metallic material to radiate heat to an environment outside of radome **1402.** Heat transfer door **1406** comprises a plurality of perforations to allow heat to escape from radome **1402.** The plurality of perforations includes any desirable quantity, positioning, size, and shape of perforations. In other non-depicted examples, heat transfer door **1406** can comprise a plurality of louvers.

In view **1400,** metal connection **1408** is present in mounting system **1100.** Metal connection **1408** is formed of any desirable metal configured to provide heat conduction. Metal connection **1408** contacts subplate **1202.** Metal connection **1408** contacts heat transfer door **1406.** Metal connection **1408** conducts heat from subplate **1202** to heat transfer door **1406** to remove heat from beneath radome **1402.**

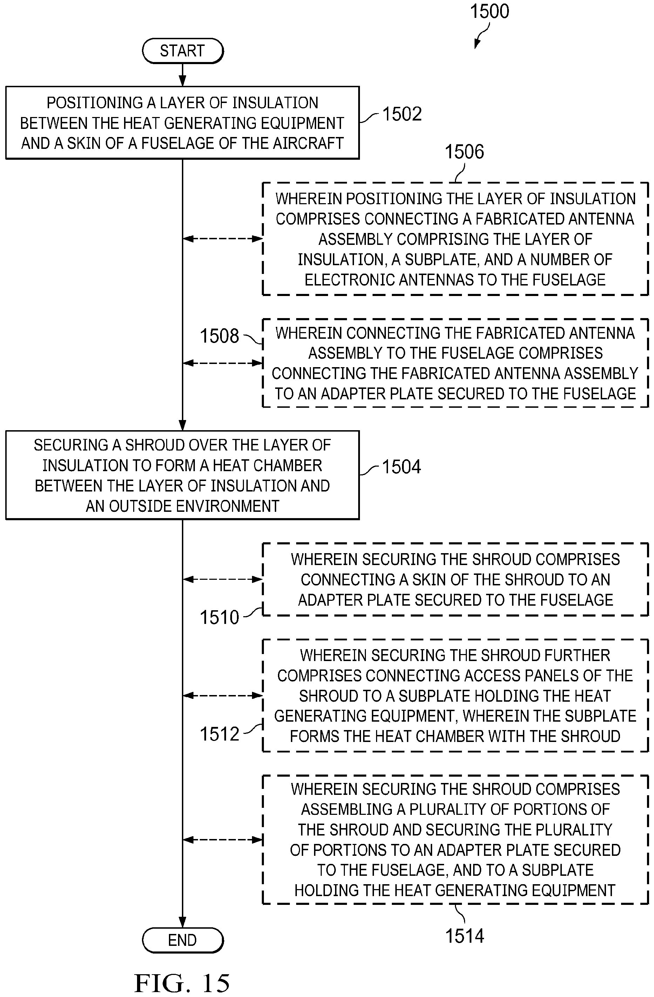

Turning now to **Figure 15****,** a flowchart of a method of attaching heat generating equipment to an exterior of an aircraft is depicted in accordance with an illustrative embodiment. Method **1500** can be performed to attach mounting system **120** to aircraft **100** of **Figure 1****.** Method **1500** can be performed to attach mounting system **202** to aircraft **200** of **Figure 2****.** Method **1500** can be performed using mounting system **301** of **Figure 3****.** Method **1500** can be performed using mounting system **401** of **Figures 4-8****.** Method **1500** can be performed using mounting system **901** of **Figure 9****.**

Method **1500** positions a layer of insulation between the heat generating equipment and a skin of a fuselage of the aircraft (operation **1502).** Method **1500** secures a shroud over the layer of insulation to form a heat chamber between the layer of insulation and an outside environment (operation **1504).** Afterwards, method **1500** terminates.

In some illustrative examples, positioning the layer of insulation comprises connecting a fabricated antenna assembly comprising the layer of insulation, a subplate, and a number of electronic antennas to the fuselage (operation **1506).** In these illustrative examples, the fabricated antenna assembly can be assembled offline. Assembling the fabricated antenna assembly offline can reduce the time and resources used during assembly on the aircraft. In some illustrative examples, connecting the fabricated antenna assembly to the fuselage comprises connecting the fabricated antenna assembly to an adapter plate secured to the fuselage (operation **1508).** In some illustrative examples, the adapter plate is already secured to the fuselage of an aircraft in service. In these illustrative examples, the fabricated antenna assembly can be connected to the adapter plate as part of a retrofit. In other illustrative examples, the fabricated antenna assembly can be connected to the adapter plate during manufacturing of the aircraft

In some illustrative examples, securing the shroud comprises connecting a skin of the shroud to an adapter plate secured to the fuselage (operation **1510).** In some illustrative examples, securing the shroud further comprises connecting access panels of the shroud to a subplate holding the heat generating equipment, wherein the subplate forms the heat chamber with the shroud (operation **1512).** In these illustrative examples, the shroud comprises a plurality of pieces. In some illustrative examples, securing the shroud comprises assembling a plurality of portions of the shroud and securing the plurality of portions to an adapter plate secured to the fuselage, and to a subplate holding the heat generating equipment (operation **1514).**

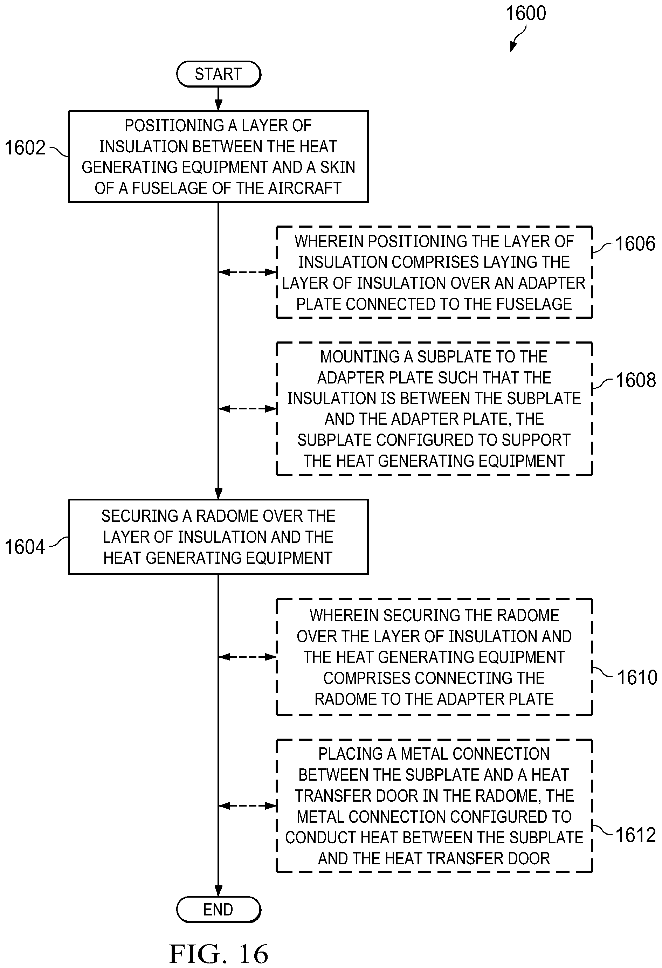

Turning now to **Figure 16****,** a flowchart of a method of attaching heat generating equipment to an exterior of an aircraft is depicted in accordance with an illustrative embodiment. Method **1600** can be performed to attach mounting system **120** to aircraft **100** of **Figure 1****.** Method **1600** can be performed to attach mounting system **1002** to aircraft **1000** of **Figure 10****.** Method **1600** can be performed using mounting system **1100** of **Figures 11-12****.** Method **1600** can be performed using components of mounting system **1100** depicted in view **1300** of **Figure 13****.** Method **1600** can be performed using mounting system **1100** depicted in view **1400** of **Figure 14****.**

Method **1600** positions a layer of insulation between the heat generating equipment and a skin of a fuselage of the aircraft (operation **1602).** Method **1600** secures a radome over the layer of insulation and the heat generating equipment (operation **1604).**

In some illustrative examples, positioning the layer of insulation comprises laying the layer of insulation over an adapter plate connected to the fuselage (operation **1606).** The layer of insulation is configured to cover a first face of the adapter plate to reduce or eliminate heat transferred to adapter plate.

In some illustrative examples, method **1600** mounts a subplate to the adapter plate such that the layer of insulation is between the subplate and the adapter plate, wherein the subplate is configured to support the heat generating equipment (operation **1608).** In some illustrative examples, the subplate is a generic subplate configured to receive a plurality of different types of heat generating equipment. In some illustrative examples, the subplate is a unitary metal structure.

In some illustrative examples, securing the radome over the layer of insulation and the heat generating equipment comprises connecting the radome to the adapter plate (operation **1610).** In some illustrative examples, the adapter plate is present on an aircraft that is already in service. In these illustrative examples, the radome can be secured as part of a retrofit. In some illustrative examples, the adapter plate is connected to the aircraft in order to receive the radome as part of an initial manufacturing of the aircraft.

In some illustrative examples, method **1600** places a metal connection the subplate and a heat transfer door in the radome, wherein the metal connection is configured to conduct heat between the subplate and the heat transfer door (operation **1612).**

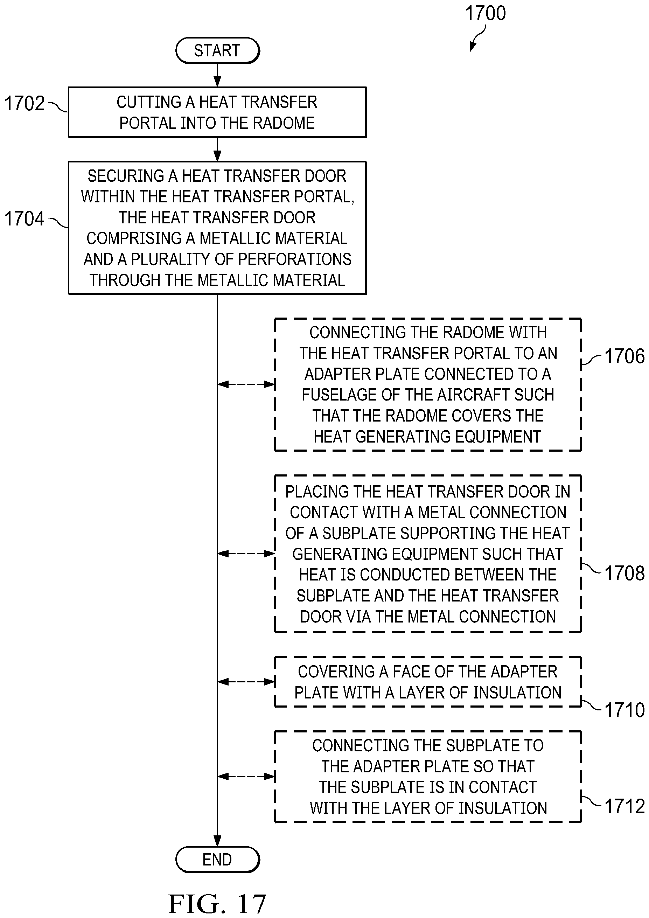

Turning now to **Figure 17****,** a flowchart of a method of retrofitting a radome for covering heat generating equipment on an aircraft is depicted in accordance with an illustrative embodiment. Method **1700** can be performed to retrofit radome **1018** of **Figure 10****.** Method **1700** can be used to retrofit a radome to be connected to adapter plate **1102** of **Figures 11-12****.** Method **1700** can be used to retrofit radome **1302** of **Figure 13****.** Method **1700** can be used to retrofit radome **1402** of **Figure 14****.**

Method **1700** cuts a heat transfer portal into the radome (operation **1702).** Method **1700** secures a heat transfer door within the heat transfer portal, wherein the heat transfer door comprises a metallic material and a plurality of perforations through the metallic material (operation **1704).** Afterwards, method **1700** terminates.

In some illustrative examples, method **1700** connects the radome with the heat transfer portal to an adapter plate connected to a fuselage of the aircraft such that the radome covers the heat generating equipment (operation **1706).** In some illustrative examples, method **1700** places the heat transfer door in contact with a metal connection of a subplate supporting the heat generating equipment such that heat is conducted between the subplate and the heat transfer door via the metal connection (operation **1708).**

In some illustrative examples, method **1700** covers a first face of the adapter plate with a layer of insulation (operation **1710).** In some illustrative examples, method **1700** connects the subplate to the adapter plate so that the subplate is in contact with the layer of insulation (operation **1712).**

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **1506** through operation **1514** may be optional. As another example, operation **1606** through operation **1612** may be optional. As another example, operation **1706** through operation **1712** may be optional.

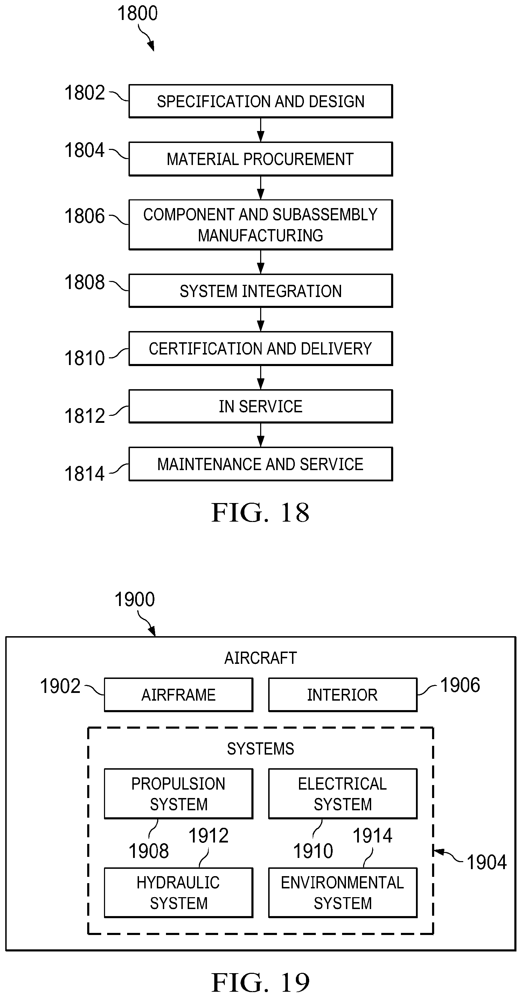

Illustrative embodiments of the present disclosure may be described in the context of aircraft manufacturing and service method **1800** as shown in **Figure 18** and aircraft **1900** as shown in **Figure 19****.** Turning first to **Figure 18****,** an illustration of an aircraft manufacturing and service method in a form of a block diagram is depicted in accordance with an illustrative embodiment. During pre-production, aircraft manufacturing and service method **1800** may include specification and design **1802** of aircraft **1900** in **Figure 19** and material procurement **1804.**

During production, component and subassembly manufacturing **1806** and system integration **1808** of aircraft **1900** takes place. Thereafter, aircraft **1900** may go through certification and delivery **1810** in order to be placed in service **1812.** While in service **1812** by a customer, aircraft **1900** is scheduled for routine maintenance and service **1814,** which may include modification, reconfiguration, refurbishment, or other maintenance and service.

Each of the processes of aircraft manufacturing and service method **1800** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 19****,** an illustration of an aircraft in a form of a block diagram is depicted in which an illustrative embodiment may be implemented. In this example, aircraft **1900** is produced by aircraft manufacturing and service method **1800** of **Figure 18** and may include airframe **1902** with plurality of systems **1904** and interior **1906.** Examples of systems **1904** include one or more of propulsion system **1908,** electrical system **1910,** hydraulic system **1912,** and environmental system **1914.** Any number of other systems may be included.

Apparatuses and methods embodied herein may be employed during at least one of the stages of aircraft manufacturing and service method **1800.** One or more illustrative embodiments may be manufactured or used during at least one of component and subassembly manufacturing **1806,** system integration **1808,** in service **1812,** or maintenance and service **1814** of **Figure 18****.**

The illustrative examples provide the ability to install a new antenna technology into existing airplane structure in production and retrofit. The illustrative examples also allow for management of the heat of the new electronic antenna technologies. New electronic antenna technologies can get hotter than the fuselage skin can accept if the antennas were to be installed directly on top of the skin.

The illustrative examples provide mounting systems with a smaller protrusion than traditional radomes. The illustrative examples provide mounting systems that are shorter than conventional radomes.

The illustrative examples provide protection against overheating of an aircraft skin. The illustrative examples provide thermal protection even if hardware thermal shutdown protections do not trigger.

Electronically steered antennas are expected to produce excessive amounts of heat, which may increase the temperature of the aircraft skin to undesirably high levels is secured directly. The illustrative examples establish a new method to direct excess heat from the base of very hot electronically steered antennas (ESA) up and out to the atmosphere through a subplate and shroud radiator. Insulation below Esa protects aircraft fuselage skin.

The shroud is a low profile and aerodynamically advantageous design. Due to the aerodynamics, the shroud leads to lower levels of aerodynamic drag, compared to a conventional radome. The illustrative examples provide protection from bird strike impacts. The shroud provides lightning strike protection, due to the large and continuous ground path. The integrated nature of the subplate and its attach fittings will permit off-site installation of antennas, associated line repair units (LRUs), wire harnesses, grounding straps into a single assembly for delivery to the final assembly line. Reduced effort is used to bolt an integrated subplate and ESA assembly in comparison to assembling completely on the assembly line. Decentralized manufacturing with offsite installation will produce large time and cost savings, compared to the very long installation times required for today's mechanically steered antennas.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A mounting system (202) for attaching heat generating equipment (204) to an exterior of an aircraft, the mounting system comprising:
a heat chamber (208) formed by a number of conductive materials (212, 214), wherein the heat chamber has a recess (216) open to an environment (1028) outside the aircraft (200);
heat generating equipment (204) secured within the recess (216); and
a layer of insulation (210) between the heat chamber (208) and the aircraft (200), wherein the layer of insulation (210) is positioned on an opposite side of the heat chamber (208) than an opening of the recess (216).

2. The mounting system of claim 1, wherein the heat generating equipment (204) comprises a number of electronic antennas (219).

3. The mounting system of claim 1 or claim 2, wherein the heat chamber (208) comprises a subplate (224), formed of a conductive material, comprising the recess (216), and having a backside (262);
wherein the layer of insulation (210) is secured to the backside (262) of the subplate (224).

4. The mounting system of claim 3, wherein the heat chamber (208) further comprises a shroud (222) comprising a plurality of portions secured together, wherein the shroud is formed of a conductive material and configured to provide an aerodynamic design.

5. The mounting system of claim 4, further comprising:
a skirt seal connected to a lower ring of the shroud; and
a thermal isolator positioned between the lower ring and a skin of the aircraft.

6. The mounting system of any one of claims 3-5, wherein the subplate is a unitary metal structure.

7. The mounting system of any one of claims 3-6, wherein the subplate further comprises a flange surrounding the recess.

8. The mounting system of claims 4 and 7, wherein the flange of the subplate is secured to the shroud.

9. The mounting system of any one of claims 1-8, further comprising:
a number of thermal isolators positioned between the heat chamber and the aircraft.

10. The mounting system of claim 9, wherein the heat chamber comprises a subplate, and wherein the mounting system further comprises:
an adapter plate configured to connect components to a skin of the aircraft; and
fittings connecting the subplate to the adapter plate; and
wherein of the thermal isolators are positioned between the subplate and the adapter plate.

11. The mounting system of claim 4, wherein the plurality of portions of the shroud comprises a skin and access panels, wherein the skin is secured to an adapter plate configured to connect components to a skin of the aircraft, and wherein the access panels are designed to accommodate cross-sectional shapes of the heat generating equipment.

12. The mounting system of claim 4 or claim 11, wherein a number of thermal isolators is positioned between the shroud and a skin of the aircraft.

13. A method of attaching heat generating equipment to an exterior of an aircraft, the method comprising:
positioning a layer of insulation between the heat generating equipment and a skin of a fuselage of the aircraft; and
securing the heat generating equipment in a recess of a heat chamber formed by a number of conductive materials between the layer of insulation and an outside environment.

14. The method of claim 13, wherein said positioning the layer of insulation comprises connecting a fabricated antenna assembly comprising the layer of insulation, a subplate, and a number of electronic antennas to the fuselage.

15. The method of claim 13 or claim 14, wherein it comprises securing a shroud over the layer of insulation to form the heat chamber, and connecting a skin of the shroud to an adapter plate secured to the fuselage; and
wherein said securing the shroud further comprises connecting access panels of the shroud to a subplate holding the heat generating equipment, wherein the subplate forms the heat chamber with the shroud.
